# EUROPÄISCHE PATENTANMELDUNG

(11) **EP 0 791 291 A2**
(43) Veröffentlichungstag der Anmeldung: **27.08.1997**
(21) Anmeldenummer: 97102752.9
(22) Anmeldetag: 20.02.1997
(51) Int. Cl.: A21C 1/14

(54) **Chargenkneter**

(30) Priorität: 22.02.1996 DE 29603141 U
(71) Anmelder: Werner & Pfleiderer Lebensmitteltechnik GmbH, 91550 Dinkelsbühl (DE)
(72) Erfinder: Dollinger, Rainer, 91749 Wittelshofen (DE); Greulich, Hans-Peter, 71229 Leonberg (DE); Mülders, Herbert, 52222 Stolberg (DE)
(74) Vertreter: Schneck, Herbert, Dipl.-Phys., Dr.

(57) **Zusammenfassung**

Bei einem Chargenkneter zum Kneten von Teig mit einem Knetwerk und einer Knetschale zur Aufnahme des Teiges ist zur Erzielung einer leichten und kostengünstigen Entfernung von Teigresten von der Knetschalenwand nach Beendigung des Knetvorganges vorgesehen, daß oberhalb der Knetschale eine Düse zum Besprühen der Wand der Knetschale mit Öl angeordnet ist, welche aus einem Vorratsbehälter mit Öl versorgt wird.

## Beschreibung

Die Erfindung richtet sich auf einen Chargenkneter zum Kneten von Teig mit einem Knetwerk und einer Knetschale zur Aufnahme des Teiges.

Bei derartigen Chargenknetern setzt sich während des Knetvorganges je nach Rezeptur mehr oder weniger Teig an der Knetschalenwand fest. Dieser muß nach dem Entleeren der Knetschale von Hand oder mit einer als solcher bekannten mechanischen Ausschälvorrichtung von der Schalenwand entfernt werden. Die manuelle Entfernung des Teiges bedingt einen nicht unerheblichen Personalaufwand und damit Kosten. Demgegenüber wirken sich fest eingebaute Teigschaber in der Intensivknetphase hinsichtlich der Teigentwicklung störend aus und verlängern die Chargenknetzeit. Darüber hinaus können sie zu einer Minderung der Teigqualität führen.

Ebenfalls bekannte Ausschalvorrichtungen an den Knetschalenauskippeinrichtungen, z.B. Hebekippern, sind mit hohen Invenstitions- und Folgekosten verbunden und können nur in Abhängigkeit von der jeweiligen Produktlinie eingesetzt werden.

Hiervon ausgehend liegt der Erfindung die Aufgabe zugrunde, einen Chargenkneter der eingangs genannten Art so weiterzubilden, daß die Entfernung der Teigreste von der Knetschalenwand nach Beendigung des Knetvorganges leicht und kostengünstig erfolgen kann.

Zur Lösung dieser Aufgabe ist vorgesehen, daß oberhalb der Knetschale eine Düse zum Besprühen der Wand der Knetschale mit Öl vorgesehen ist, welche aus einem Vorratsbehälter mit Öl versorgt wird.

Durch die erfindungsgemäße Ausgestaltung wird sowohl der Einsatz mechanischer Abschabeinrichtungen als auch einer manuellen Tätigkeit mit den damit jeweils verbundenen Nachteilen vermieden.

Günstigerweise ist vorgesehen, daß zwischen Ölvorratsbehälter und Düse eine steuerbare Pumpe angeordnet ist, so daß das Öl mit einem hinreichenden Druck zur Erzielung einer gleichmäßigen Benetzung und Bespülung eingespritzt wird.

Nachdem moderne Chargenkneter in der Regel programmierbare Steuerungen aufweisen, kann im Rahmen der Erfindung vorgesehen sein, die Ölzugabe programmgesteuert auszulösen.

Bei Knetern ohne Programmsteuerung bzw. wenn man einen diesbezüglichen Programmieraufwand vermeiden möchte, ist es auch denkbar, über einen Schalter die Ölzugabe manuell auszulösen.

Bei programmgesteuerten Knetern ist vorzugsweise vorgesehen, daß die Ölzugabe in dem jeweiligen Knetprogramm für jeden gesonderten Knetschritt hinsichtlich des Zeitpunktes der Sprühfreigabe und der Sprühdauer abgespeichert wird.

Weiterhin kann vorgesehen sein, daß die Ölzugabe in Abhängigkeit von einem oder mehreren der Parameter Knetzeit, Leistungsaufnahme, Energieaufnahme, Teigtemperatur und Teigkonsistenz programmgesteuert auslösbar ist.

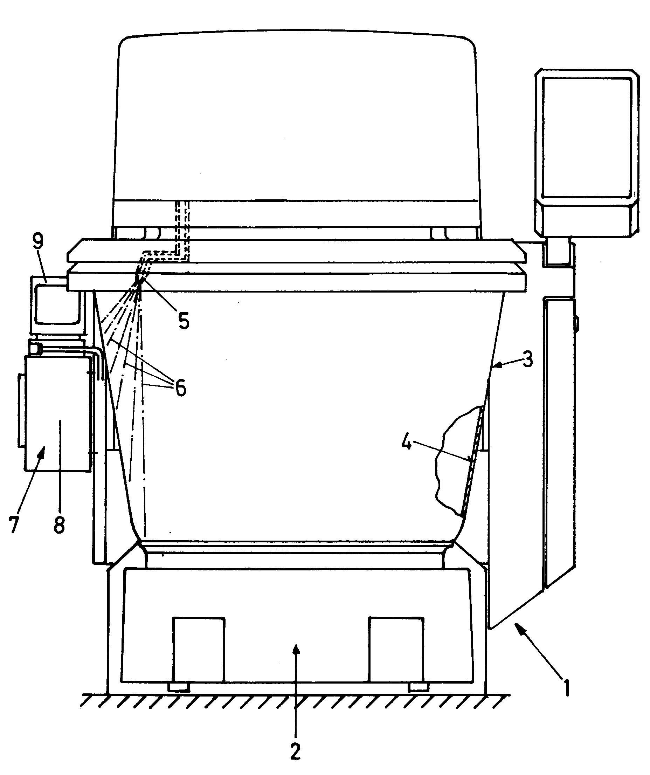

Nachfolgend wird die Erfindung anhand eines bevorzugten Ausführungsbeipiels in Verbindung mit der Zeichnung näher erläutert. Diese zeigt eine schematische Darstellung eines erfindungsgemäßen Chargenkneters.

Ein in der Zeichnung dargestellter Chargenkneter 1 umfaßt ein Grundgestell 2, auf welchem eine Knetschale 3 gelagert ist, in welcher ein in der Zeichnung nicht dargestelltes Knetwerk aktiv ist. Nach dem Entleeren des gekneteten Teigs verbleiben Teigreste an der Innenwand 4 der Knetschale 3.

Zur Entfernung dieser Teigreste ist eine Sprühdüse 5 im Bereich der Oberkante der Knetschale 3 angeordnet, welche gegen die Knetschalenwand 4 gerichtet ist, so daß ein Ölstrahl 6 die Knetschalenwand 4 gleichmäßig besprüht.

Die Düse 5 steht in Verbindung mit einem Beölungsaggregat 7 umfassend einen Vorratsbehalter 8 für das Öl und eine Pumpe 9.

Die Pumpe 9 wird über die programmierbare Steuerung automatisch angesteuert, so daß die Ölzugabe programmgesteuert ausgelöst wird.

## Patentansprüche

1. Chargenkneter zum Kneten von Teig mit einem Knetwerk und einer Knetschale zur Aufnahme des Teiges, **dadurch gekennzeichnet, daß** oberhalb der Knetschale (3) eine Düse (5) zum Besprühen der Wand (4) der Knetschale mit Öl vorgesehen ist, welche aus einem Vorratsbehalter mit Öl versorgt wird.

2. Chargenkneter nach Anspruch 1, **dadurch gekennzeichnet, daß** zwischen Ölvorratsbehälter (8) und Düse (5) eine steuerbare Pumpe (9) angeordnet ist.

3. Chargenkneter mit einer programmierten bzw. programmierbaren Steuerung, **dadurch gekennzeichnet, daß** die Ölzugabe programmgesteuert auslösbar ist.

4. Chargenkneter, **dadurch gekennzeichnet, daß** die Ölzugabe über einen manuellen Schalter auslösbar ist.

5. Chargenkneter nach Anspruch 3, **dadurch gekennzeichnet, daß** die Ölzugabe in dem jeweiligen Knetprogramm für jeden gesonderten Knetschritt hinsichtlich des Zeitpunktes der Sprühfreigabe und der Sprühdauer abgespeichert wird.

6. Chargenkneter nach Anspruch 5, **dadurch gekennzeichnet, daß** die Ölzugabe in Abhängigkeit von einem oder mehreren der Parameter Knetzeit, Leistungsaufnahme, Energieaufnahme, Teigtemperatur und Teigkonsistenz programmgesteuert auslösbar ist.
